# EUROPÄISCHE PATENTSCHRIFT

(11) **EP 1 753 983 B1**
(45) Veröffentlichungstag und Bekanntmachung des Hinweises auf die Patenterteilung: **20.09.2017**
(21) Anmeldenummer: 05731952.7
(22) Anmeldetag: 08.04.2005
(51) Int. Cl.: G01D 3/08, F16H 59/70, F16H 59/10, F16H 61/12

(54) **SENSOR FÜR EINE GETRIEBESTEUERUNG INSBESONDERE EINES KRAFTFAHRZEUGS**
SENSOR FOR A GEARBOX CONTROL SYSTEM ESPECIALLY OF A MOTOR VEHICLE
CAPTEUR POUR COMMANDE DE BOITE DE VITESSES, EN PARTICULIER MONTEE DANS UN VEHICULE AUTOMOBILE

(30) Priorität: 21.05.2004 DE 102004024954
(43) Veröffentlichungstag der Anmeldung: 21.02.2007
(73) Patentinhaber: ROBERT BOSCH GMBH, 70442 Stuttgart (DE)
(72) Erfinder: WEIBERLE, Peter, 74343 Sachsenheim (DE); SPRAFKE, Peter, 70469 Stuttgart (DE); GERHAEUSSER, Martin, 74389 Cleebronn (DE)
(86) Internationale Anmeldenummer: PCT/EP2005/051563
(87) Internationale Veröffentlichungsnummer: WO 2005/114006

(56) Entgegenhaltungen:
- EP-A- 0 902 254
- EP-A- 1 065 135
- GB-A- 2 255 410
- US-B1- 6 205 874

## Beschreibung

### Stand der Technik

Die Erfindung betrifft einen Sensor nach dem Oberbegriff des Anspruchs 1.

Ein gattungsgemäßer Sensor ist in der EP902254A2 gezeigt.

Zur Steuerung von Getrieben insbesondere von Kraftfahrzeugen ist es erforderlich, die Getriebestellung zu ermitteln. Hierzu ist ein Positionsschalter vorgesehen, wie er beispielsweise aus der DE 102 27 633 A1 bekannt ist. Bei den dort verwendeten Sensoren kann es sich beispielsweise um mechanische Schalter handeln, mit deren Hilfe die in der DE 102 27 633 A1 erläuterten Binärcodes erzeugt werden. Ebenfalls können elektromagnetisch wirkende Hall-Sensoren vorgesehen sein, die unter anderem den Vorteil besitzen, dass sie berührungslos arbeiten.

Unabhängig von der Art der verwendeten Sensoren kann bei der DE 102 27 633 A1 durch eine entsprechende Auswahl von günstigen Binärcodes eine Mehrzahl von Fehlern der Sensoren erkannt werden. Dies wird dadurch erreicht, dass zulässige Binärcodes für die verschiedenen Stellungen des Getriebes vorgesehen sind, sowie an sich unzulässige Binärcodes, deren Auftreten auf einen Fehler in dem Positionsschalter hinweist.

Tritt jedoch beispielsweise ein niederohmiger Kurzschluss der Ausgangsleitung eines der Sensoren nach Masse auf, so wird dies bei der DE 102 27 633 A1 als Low-Signal, also als binäre "0" erkannt. Entsteht mit diesem fehlerhaft erkannten Low-Signal ein zulässiger Binärcode, so hat dies zur Folge, dass der Fehler nicht erkannt und eine fehlerhafte Getriebestellung ermittelt wird.

### Aufgabe und Vorteile der Erfindung

Der Erfindung liegt die Aufgabe zugrunde, einen Sensor für eine Getriebesteuerung insbesondere eines Kraftfahrzeugs zu schaffen, bei dem beispielsweise auch niederohmige Kurzschlüsse nach Masse erkennbar sind.

Die Aufgabe wird erfindungsgemäß durch einen Sensor nach dem Anspruch 1 gelöst.

Tritt nunmehr bei dem erfindungsgemäßen Sensor beispielsweise ein niederohmiger Kurzschluss der Ausgangsleitung nach Masse auf, so hat dies zur Folge, dass die Signalspannung nicht mehr die beiden an sich vorgesehenen, sich von Masse unterscheidenden Signale einnehmen kann. Stattdessen wird die Signalspannung aufgrund des Kurzschlusses auf Masse gezogen. Diese Abweichung der Signalspannung von ihren beiden an sich vorgesehen Signalen kann von der nachgeordneten Getriebesteuerung als Fehler erkannt werden.

Bei der Erfindung sind die beiden Signale durch vorgegebene Spannungsbereiche festgelegt. Wiederum wird auf diese Weise eine sichere Unterscheidung der beiden Signale von der Versorgungsspannung und von Masse gewährleistet. Ein Kurzschluss der Ausgangsleitung des Sensors nach Masse oder zur Versorgungsspannung kann damit sicher als Fehler erkannt werden.

Besonders vorteilhaft sind die Spannungsbereiche der beiden Signale durch vorgegebene Grenzen definiert, wobei eine oder mehrere der Grenzen von der Versorgungsspannung abhängig sind. Auf diese Weise wird eine flexible, aber trotzdem einfache Festlegung der Spannungsbereiche erreicht.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels eines erfindungsgemäßen Sensors für eine Getriebesteuerung insbesondere eines Kraftfahrzeugs,
- Figur 2: zeigt ein schematisches Zeitdiagramm von Ausgangssignalen eines ersten Ausführungsbeispiels des Sensors der Figur 1, und Figuren 3a bis 3c zeigen schematische Diagramme von Ausgangssignalen weiterer Ausführungsbeispiele des Sensors der Figur 1.

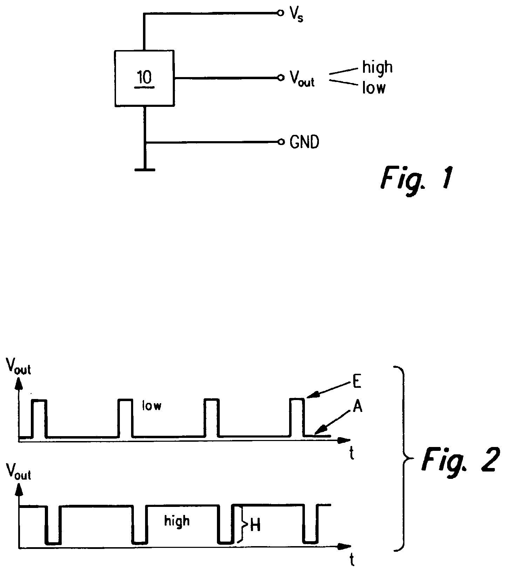

In der Figur 1 ist ein Sensor 10 dargestellt, der bei einer Getriebesteuerung eines Kraftfahrzeugs eingesetzt werden kann. Bei dem Sensor 10 kann es sich um einen mechanischen, elektromagnetischen, kapazitiven oder auf anderen Messprinzipien beruhenden Sensor handeln. Der Sensor 10 wird von einer Versorgungsspannung Vs beaufschlagt und ist an Masse GND angeschlossen. Die Versorgungsspannung Vs kann bei einem Kraftfahrzeug beispielsweise einen Wert zwischen etwa 3 Volt und etwa 12 Volt einnehmen, der Masse GND entspricht 0 Volt. Als Ausgangssignal liefert der Sensor 10 eine Signalspannung Vout. Diese Signalspannung Vout kann der vorstehend genannten Getriebesteuerung zugeführt sein und dort zur Ermittlung der Getriebestellung herangezogen werden.

Der Sensor 10 ist dazu vorgesehen, zwei Zustände zu erfassen. Die Signalspannung Vout kann deshalb ebenfalls zwei Zustände aufweisen, nämlich das Signal "high" und das Signal "low".

Weiterhin ist der Sensor 10 derart ausgebildet, dass sich die beiden möglichen Signale "high" und "low" der Signalspannung Vout von der Versorgungsspannung Vs und von Masse GND unterscheiden.

In der Figur 2 sind die beiden möglichen Signale "high" und "low" der Signalspannung Vout für ein erstes Ausführungsbeispiel des Sensors 10 dargestellt. Die beiden Signale "high" und "low" sind als pulsweitenmodulierte Signale ausgebildet. In der Figur 2 weist das low-Signal ein Ein/Ausschaltverhältnis von beispielhaft 20/80 auf, während das high-Signal ein Ein/Ausschaltverhältnis von 80/20 besitzt.

Die beiden Signale "high" und "low" werden von dem Sensor 10 mit Hilfe einer entsprechenden elektrischen Schaltung in Abhängigkeit von der Schaltstellung des Sensors 10 erzeugt.

Weist die Signalspannung im betrieb des Sensors 10 ein Ein/Ausschaltverhältnis von etwa 20/80 auf, so entspricht dies dem low-Signal. Weist die Signalspannung ein Ein/Ausschaltverhältnis von etwa 80/20 auf, so entspricht dies dem high-Signal. Andere Ein/Ausschaltverhältnisse weisen auf einen Fehler des Sensors 10 hin.

Es versteht sich, dass diese Ein/Ausschaltverhältnisse auch andersartig gewählt sein können. Bei einem Ein/Ausschaltverhältnis von 99/1 bzw. 1/99 ist es möglich, den zeitlich aufeinanderfolgend auftretenden, kurzen positiven oder negativen Impuls zum Zwecke der Diagnose heranzuziehen. Treffen derartige Impulse laufend ein, so liegt zumindest insoweit kein Fehler vor, bleiben die Impulse aus, so kann auf einen Fehler des Sensors 10 geschlossen werden.

Die beiden in der Figur 2 gezeigten, möglichen Signale "high" und "low" der Signalspannung Vout unterscheiden sich aufgrund ihrer Ein/Ausschaltverhältnisse von der Versorgungsspannung Vs und von Masse GND. Weist die Ausgangsleitung des Sensors 10 einen Kurzschluss nach Masse GND oder zur Versorgungsspannung Vs auf, so entspricht die Signalspannung Vout weder dem high-Signal, noch dem low-Signal. Der Kurzschluss des Sensors 10 kann damit als Fehler erkannt werden.

Bei der Getriebesteuerung eines Kraftfahrzeugs muss gewährleistet sein, dass das Kraftfahrzeug nur dann gestartet werden kann, wenn sich das Getriebe in einer Parkstellung P oder in einer neutralen Stellung N befindet. Bekannterweise können diese Getriebestellungen mit Hilfe mehrerer der Sensoren 10 ermittelt werden. Bei einer geringen Außentemperatur kann die von einer Batterie des Kraftfahrzeugs gelieferte Versorgungsspannung Vs sehr gering werden und insbesondere bis auf 3 Volt absinken. Auch bei einer derart kleinen Versorgungsspannung Vs müssen die beiden Signale "high" und "low" jedoch immer noch voneinander unterscheidbar sein. Hierzu ist es erforderlich, dass die Ein- und Ausschaltzustände der beiden Signale "high" und "low" auch bei kleinen Versorgungsspannungen Vs voneinander unterscheidbar sind.

In der Figur 2 sind keine Werte für den Einschaltzustand E und den Ausschaltzustand A der beiden Signale "high" und "low" angegeben. Da sich die beiden Signale "high" und "low" durch ihre pulsweitenmodulierte Ausbildung von der Versorgungsspannung Vs und von Masse GND unterscheiden, kann der Einschaltzustand E der Versorgungsspannung Vs und der Ausschaltzustand A der Masse GND entsprechen. Wesentlich ist, dass die Differenz zwischen dem Einschaltzustand E und dem Ausschaltzustand A, also die Schalthöhe H, einen minimalen Wert auch bei einer geringen Versorgungsspannung Vs nicht unterschreitet. Dieser minimale Wert kann beispielhaft 1,0 Volt betragen. Damit wird die vorstehend erläuterte Erkennung der Parkstellung P oder der neutralen Stellung N des Getriebes in jedem Fall gewährleistet.

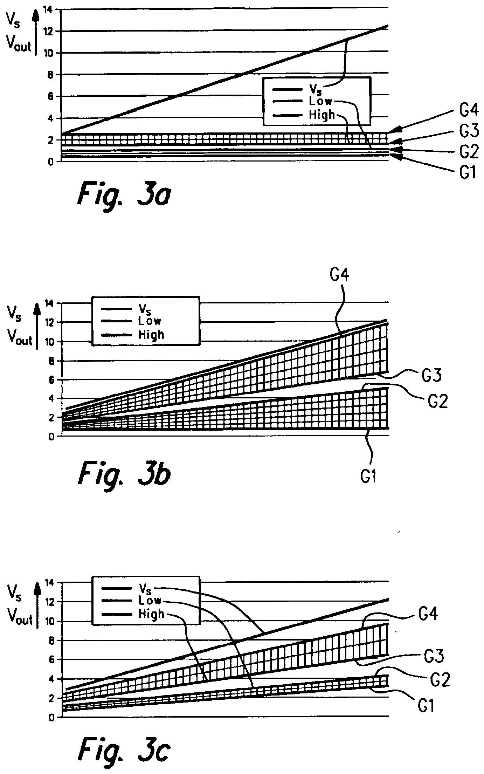

In den Figuren 3a bis 3c sind die beiden möglichen Signale "high" und "low" der Signalspannung Vout für weitere Ausführungsbeispiele des Sensors 10 dargestellt. Die beiden Signale "high" und "low" sind durch vorgegebene Spannungsbereiche festgelegt.

In der Figur 3a ist der Spannungsbereich für das low-Signal durch die Grenzen G1 = 0,5 Volt und G2 = 1,0 Volt und der Spannungsbereich für das high-Signal durch die Grenzen G3 = 1,5 Volt und G4 = 2,5 Volt definiert. Diese Grenzen G1, G2, G3, G4 sind unabhängig von der Versorgungsspannung Vs. Entsprechendes gilt damit auch für die angegebenen Spannungsbereiche der beiden Signale "high" und "low".

Liegt die Signalspannung Vout im Betrieb des Sensors 10 innerhalb eines der beiden Spannungsbereiche, so entspricht dies dem jeweils zugehörigen Signal "high" oder "low". Liegt die Signalspannung Vout außerhalb der beiden Spannungsbereiche, so liegt ein Fehler vor.

In der Figur 3b ist der Spannungsbereich für das low-Signal durch die Grenzen G1 = 0,5 Volt und G2 = 0,5 x Vs - 0,5 Volt und der Sapnnungsbereich für das high-Signal durch die Grenzen G3 = 0,5 x Vs + 0,5 Volt und G4 = Vs - 0,5 Volt definiert. Die Grenzen G2, G3, G4 sind dabei abhängig von der Versorgungsspannung Vs. Entsprechendes gilt damit auch für die angegebenen Spannungsbereiche der beiden Signale "high" und "low". Es versteht sich, dass die für die Berechnung der Grenzen G1, G2, G3, G4 angegebenen Werte auch anders gewählt werden können.

Liegt die Signalspannung Vout im Betrieb des Sensors 10 innerhalb von einem der beiden vorstehend definierten Spannungsbereiche, so entspricht dies dem jeweils zugehörigen Signal "high" oder "low". Liegt die Signalspannung Vout außerhalb der beiden Spannungsbereiche, so liegt ein Fehler vor.

In der Figur 3c ist der Spannungsbereich für das low-Signal durch die Grenzen G1 = 0,2 x Vs und G2 = 0,4 x Vs und der Spannungsbereich für das high-Signal durch die Grenzen G3 = 0,5 x Vs und G4 = 0,85 x Vs definiert. Die Grenzen G1, G2, G3, G4 sind abhängig von der Versorgungsspannung Vs. Entsprechendes gilt damit auch für die angegebenen Spannungsbereiche der beiden Signale "high" und "low". Es versteht sich, dass die für die Berechnung der Grenzen G1, G2, G3, G4 angegebenen Werte auch anders gewählt werden können.

Liegt die Signalspannung Vout innerhalb von einem der beiden vorstehend definierten Spannungsbereiche, so entspricht dies dem jeweils zugehörigen Signal "high" oder "low". Liegt die Signalspannung Vout außerhalb der beiden Spannungsbereiche, so liegt ein Fehler vor.

Sämtliche in den Figuren 3a bis 3c gezeigten, möglichen Signale "high" und "low" der Signalspannung Vout unterscheiden sich aufgrund ihrer vorgegebenen Grenzen von der Versorgungsspannung Vs und von Masse GND. Weist die Ausgangsleitung des Sensors 10 einen Kurzschluss nach Masse GND oder zur Versorgungsspannung Vs auf, so entspricht die Signalspannung Vout weder dem high-Signal, noch dem low-Signal. Der Kurzschluss des Sensors 10 kann damit als Fehler erkannt werden.

## Patentansprüche

1. Sensor (10) für eine Getriebesteuerung insbesondere eines Kraftfahrzeugs, wobei der Sensor (10) an eine Versorgungsspannung (Vs) und an Masse (GND) anschließbar ist, wobei der Sensor (10) eine Signalspannung (Vout) erzeugt, wobei die Signalspannung (Vout) zwei Signale (high, low) einnehmen kann, wobei die beiden Signale (high, low) sich von der Versorgungsspannung (Vs) und von Masse (GND) unterscheiden, wobei die beiden Signale (high, low) durch vorgegebene Spannungsbereiche festgelegt sind (Figuren 3a bis 3c), und wobei die Spannungsbereiche der beiden Signale (high, low) durch vorgegebene Grenzen (G1, G2, G3, G4) definiert sind, **dadurch gekennzeichnet, dass** eine oder mehrere der Grenzen (G1, G2, G3, G4) von der Versorgungsspannung (Vs) abhängig sind.

2. Sensor (10) nach Anspruch 1, **gekennzeichnet durch** seine Verwendung in einem Positionsschalter einer Getriebesteuerung eines Kraftfahrzeugs.

## Claims

1. Sensor (10) for a transmission controller, in particular of a motor vehicle, the sensor (10) being able to be connected to a supply voltage (Vs) and to earth (GND), the sensor (10) generating a signal voltage (Vout), the signal voltage (Vout) being able to adopt two signals (high, low), the two signals (high, low) differing from the supply voltage (Vs) and from earth (GND), the two signals (high, low) being defined by predefined voltage ranges (figures 3a to 3c), and the voltage ranges of the two signals (high, low) being defined by predefined limits (G1, G2, G3, G4), **characterized in that** one or more of the limits (G1, G2, G3, G4) are dependent on the supply voltage (Vs).

2. Sensor (10) according to Claim 1, **characterized by** its use in a position switch of a transmission controller of a motor vehicle.

## Revendications

1. Capteur (10) pour la commande de la transmission, notamment d'un véhicule automobile,
le capteur (10) pouvant être raccordé à une tension d'alimentation (Vs) et à la masse (GND),
le capteur (10) formant une tension de signal (Vout) et la tension de signal (Vout) pouvant prendre deux signaux (haut, bas),
les deux signaux (haut, bas) étant différents de la tension d'alimentation (Vs) et de la masse (GND),
les deux signaux (haut, bas) étant définis par des plages prédéfinies de tension (figures 3a à 3c),
les plages de tensions des deux signaux (haut', bas) étant définies par des limites prédéterminées (G1, G2, G3, G4),
**caractérisé en ce que**
une ou plusieurs des limites (G1, G2, G3, G4) dépendent de la tension d'alimentation (Vs).

2. Capteur (10) selon la revendication 1, **caractérisé en ce qu'**il est utilisé comme contacteur de position pour la commande de la transmission d'un véhicule automobile.
